# EUROPÄISCHE PATENTSCHRIFT

(11) **EP 2 404 691 B1**
(45) Veröffentlichungstag und Bekanntmachung des Hinweises auf die Patenterteilung: **03.08.2016**
(21) Anmeldenummer: 11169550.8
(22) Anmeldetag: 10.06.2011
(51) Int. Cl.: B23D 45/12, B23D 45/04, B23D 45/14

(54) **Drehkranzeinheit für ein Profilbearbeitungszentrum**
Rotating ring used for machining profiles
Couronne rotative pour usinage de profilés

(30) Priorität: 08.07.2010 DE 102010027199
(43) Veröffentlichungstag der Anmeldung: 11.01.2012
(73) Patentinhaber: elumatec GmbH, 75417 Mühlacker (DE)
(72) Erfinder: Fischer, Hans-Joachim, 75417 Mühlacker (DE); Hettler, Andreas, 75417 Mühlacker (DE)
(74) Vertreter: Patentanwälte Ruff, Wilhelm, Beier, Dauster & Partner mbB

(56) Entgegenhaltungen:
- EP-A1- 2 070 649
- FR-A- 1 569 063
- FR-A1- 2 325 458
- FR-A1- 2 911 805

## Beschreibung

Die Erfindung betrifft eine Drehkranzeinheit für ein Profilbearbeitungszentrum mit einem um eine Drehachse drehbaren Drehkranz, wobei wenigstens ein Bearbeitungswerkzeug an dem Drehkranz angeordnet und eine Werkstückauflage für ein zu bearbeitendes Profil im Bereich des Drehkranzes vorgesehen ist und ein Verfahren zum Bearbeiten von Profilen mit einen Profilbearbeitungszentrum mit einer Drehkranzeinheit.

Aus der europäischen Patentschrift EP 2 070 649 B1 ist ein Profilbearbeitungszentrum mit einer Drehkranzeinheit mit mehreren Bearbeitungswerkzeugen bekannt. Drehkranzeinheiten ermöglichen zahlreiche unterschiedliche Bearbeitungsvorgänge an einer einzigen Bearbeitungsstation.

Aus der europäischen Offenlegungsschrift DE 10 2005 011 325 A1 ist eine Gehrungssäge bekannt, die ein an einem Kreisring angeordnetes Sägeaggregat aufweist. Entlang diesem Kreisring kann das Sägeaggregat um einen Winkel von etwa 270° um ein zu bearbeitendes Profil herumgeschwenkt werden. Der Kreisring selbst ist in seinem unteren Bereich mit einem Fuß versehen und kann insgesamt in einer Ebene senkrecht zu seiner Mittelachse verschoben werden. Ein Sägeblatt des Sägeaggregats ist um eine Schwenkachse verdrehbar, die stets radial zu dem Kreisring angeordnet ist.

Aus der französischen Offenlegungsschrift FR 2 325 458 die den Oberbegriff von Anspruch 1 offenbart ist eine Planetensäge zum Ablängen von Rohren bekannt, bei der ein rotierendes, kreisförmiges Sägeblatt an einem Drehkranz um den Außenumfang eines abzulängenden Rohres herumgeführt wird. Das kreisförmige Sägeblatt oder auch zwei solcher kreisförmiger Sägeblätter können um eine zur Drehachse des Drehkranzes parallele Schwenkachse in Richtung auf den Außenumfang des Rohres verschwenkt werden.

Aus der französischen Offenlegungsschrift FR 2 911 805 ist eine weitere Planetensäge bekannt, bei der ein aufklappbarer Drehkranz vorgesehen ist, der um ein abzulängendes Rohr herumgelegt werden kann. Auf den Drehkranz, der einen umlaufenden Zahnkranz aufweist, kann dann eine Sägeeinrichtung mit einem kreisförmigen Sägeblatt aufgesetzt werden. Das kreisförmige Sägeblatt kann um eine Schwenkachse, die parallel zu einer Mittellängsachse des Drehkranzes und somit des abzulängenden Rohres liegt, in Richtung auf den Außenumfang des Rohres eingeschwenkt werden. Das Sägeblatt wird dann um den Außenumfang des Rohres herumbewegt.

Eine weitere Planetensäge ist aus der französischen Patentschrift FR 1 569 063 bekannt. Ein abzulängendes Rohr ist von drei kreisförmigen, rotierenden Sägeblättern umgeben, die an einem Drehkranz angeordnet sind, der um eine Drehachse gedreht werden kann, die mit der Mittellängsachse des abzulängenden Rohres zusammenfällt. Die Sägeblätter können parallel zur Ebene des Drehkranzes auf das Rohr zugestellt werden.

Mit der Erfindung soll eine Drehkranzeinheit für ein Profilbearbeitungszentrum verbessert werden.

Erfindungsgemäß ist hierzu eine Drehkranzeinheit gemäß Anspruch 1 für ein Profilbearbeitungszentrum mit einem um eine Drehachse drehbaren Drehkranz vorgesehen, wobei wenigstens ein Bearbeitungswerkzeug an dem Drehkranz angeordnet und eine Werkstückauflage für ein zu bearbeitendes Profil im Bereich des Drehkranzes vorgesehen ist, bei der das wenigstens eine Bearbeitungswerkzeug ein Sägeaggregat ist und bei der das Sägeaggregat einen Sägekopf mit einem am Sägekopf gelagerten drehbaren Sägeblatt aufweist, wobei der Sägekopf um eine Schwenkachse relativ zum Drehkranz verschwenkbar ist und wobei die Schwenkachse wenigstens während einer Sägebearbeitung senkrecht zu einer Drehachse des Drehkranzes angeordnet ist.

Die Anordnung eines Sägeaggregats an einer im Wesentlichen konventionellen Drehkranzeinheit ermöglicht es, die Drehkranzeinheit äußerst flexibel einzusetzen, da auch Bearbeitungsvorgänge mit der Drehkranzeinheit selbst durchgeführt werden können, die üblicherweise durch separate Sägen durchgeführt werden müssen. Die Anordnung des Sägeaggregats an einem drehbaren Drehkranz ermöglicht es, ein Profil allseitig mit dem Sägeaggregat zu bearbeiten. Dies schafft neue Möglichkeiten bei der Bearbeitung und kann insbesondere auch komplizierte Bearbeitungsvorgänge an Profilen erheblich beschleunigen. Eine Drehachse des Drehkranzes liegt vorteilhafterweise parallel zu einer Mittellängsachse des zu bearbeitenden Profils und auch parallel zu einer Durchlaufrichtung des Profils durch den Drehkranz. Vorteilhafterweise ist der Drehkranz selbst in X- und Y-Richtung verschiebbar, also in einer Ebene, die senkrecht zur Drehachse und zur Durchlaufrichtung des zu bearbeitenden Profils durch die Drehkranzeinheit liegt.

Das Vorsehen einer Schwenkachse für das Sägeblatt senkrecht zu einer Drehachse des Drehkranzes ermöglicht es, ein Profil unter einem im Wesentlichen beliebigen Winkel abzutrennen.

In Weiterbildung der Erfindung ist ein Sägeblatt des Sägeaggregats relativ zu einer Werkstückauflage für ein zu bearbeitendes Profil mittels einer Drehung des Drehkranzes um wenigstens 360° verschwenkbar.

Auf diese Weise kann das Sägeblatt von allen Seiten her in Richtung auf das zu bearbeitende Profil zugestellt werden. Dies ermöglicht es mit der erfindungsgemäßen Drehkranzeinheit auch Bearbeitungen an dem Profil durchzuführen, die an und für sich eine Drehung des Profils erfordern, da sie beispielsweise auf der Unterseite des Profils vorgenommen werden sollen. Indem solche Bearbeitungen mit dem Sägeaggregat in der Drehkranzeinheit selbst vorgenommen werden können, wird die für eine gewünschte Bearbeitung erforderliche Zeit erheblich verkürzt. Auch kann eine höhere Präzision beim Sägen erreicht werden, da das Profil zwischen zwei Bearbeitungen nicht zu einer separaten Säge weiter transportiert werden muss.

In Weiterbildung der Erfindung ist das Sägeaggregat so ausgebildet, dass das Sägeblatt in Durchlaufrichtung eines zu bearbeitenden Profils gesehen vor einer Stirnseite des Profils anordenbar ist.

Auf diese Weise können auch Endbearbeitungen oder stirnseitige Bearbeitungen des Profils vorgenommen werden, beispielsweise Ausklinkungen, spitz auslaufende Stirnseiten und dergleichen. Da das Sägeaggregat vorteilhafterweise um 360° um das Profil herum verschwenkbar ist, kann eine Vielzahl auch komplizierter Bearbeitungen mit der erfindungsgemäßen Drehkranzeinheit durchgeführt werden.

In Weiterbildung der Erfindung ist das Sägeblatt des Sägeaggregates relativ zu einer Ebene des Drehkranzes in oder entgegen einer Durchlaufrichtung eines zu bearbeitenden Profils versetzt angeordnet.

Auf diese Weise kann das Sägeblatt beispielsweise größer gewählt werden, als es der Durchlassbereich der Drehkranzeinheit an und für sich erlauben würde, so dass auch in Bezug auf den bearbeitbaren Profilquerschnitt eine große Flexibilität bereitgestellt ist. Vorteilhafterweise ist das Sägeblatt in einer Durchlaufrichtung eines zu bearbeitenden Profils gesehen stromabwärts der Ebene des Drehkranzes angeordnet.

Auf diese Weise kann ein Sägevorgang, der in der Regel stets als letzter Bearbeitungsvorgang, beispielsweise nach dem Fräsen und Bohren, vorgenommen wird, auch bereits stromabwärts der Ebene des Drehkranzes vorgenommen werden. Der Austransport eines bearbeiteten Profiles ist dadurch schnell und problemlos möglich.

In Weiterbildung der Erfindung ist ein Profilgreifer oder Antriebsmittel vorgesehen, um ein zu bearbeitendes Profil während der Bearbeitung in oder entgegen einer Durchlaufrichtung zu bewegen.

Die Antriebsmittel können beispielsweise angetriebene Rollen an einer Werkstückauflage sein, die dann auch für den Austransport bearbeiteter Profile benutzt werden können. Ein Profilgreifer, der an einem zu bearbeitenden Profil stirnseitig angreift, ist vorteilhaft, um eine hohe Bearbeitungspräzision zu erreichen. Beispielsweise kann ein Profilgreifer, der an und für sich für den Durchtransport eines zu bearbeitenden Profils vorgesehen ist, mit einem zusätzlichen, in Richtung der Durchlaufrichtung bewegbaren Zusatzgreifer versehen werden, mit dem dann eine Vorschubbewegung während der Bearbeitung mit sehr hoher Präzision möglich ist. Eine entsprechende Anordnung ist in der deutschen Patentanmeldung DE 10 2006 045 847.8 beschrieben, deren Inhalt hiermit in die vorliegende Anmeldung aufgenommen wird.

In Weiterbildung der Erfindung sind im Bereich des Drehkranzes wenigstens zwei Werkstückauflagen mit Spanneinrichtungen vorgesehen, wobei die Werkstückauflagen in und entgegen einer Durchlaufrichtung verschiebbar sind.

Auf diese Weise können die Werkstückauflagen dann, wenn für eine Bearbeitung mehr Platz benötigt wird, beispielsweise auseinandergezogen werden oder gleichsinnig bewegt werden. Beispielsweise kann ein Profil mittels Bohrern und Fräsern im Bereich der Drehkranzebene bearbeitet werden. Um das Profil dann als letzten Bearbeitungsvorgang abzusägen, werden die Werkstückauflagen zusammen mit dem zu bearbeitenden Profil in Durchlaufrichtung bewegt, bis ein Zwischenraum zwischen den beiden Werkstückauflagen im Bereich eines stromabwärts der Drehkranzebene angeordneten Sägeblatts angekommen ist.

In Weiterbildung der Erfindung weist das Sägeaggregat einen Schwenkarm auf, der den Drehkranz mit dem Sägekopf verbindet und dessen Schwenkachse parallel zu einer Drehachse des Drehkranzes angeordnet ist, wobei das Sägeblatt mittels des Schwenkarms in einen Bearbeitungsbereich hinein und aus dem Bearbeitungsbereich heraus verschwenkbar ist.

Durch Vorsehen eines solchen Schwenkarmes kann das Sägeblatt vollständig aus dem Bearbeitungsbereich entfernt werden. Dies kann beispielsweise dann notwendig sein, wenn Bearbeitungen mit den übrigen Bearbeitungswerkzeugen an der Drehkranzeinheit durchgeführt werden sollen, beispielsweise Fräsen oder Bohren des Profils. Steht ein Sägevorgang an, so kann der Sägekopf mittels des Schwenkarms verschwenkt werden, um die Schwenkachse des Sägekopfes, um die das Sägeblatt verdreht werden kann, wieder senkrecht zur Durchlaufrichtung eines zu bearbeitenden Profils und damit auch senkrecht zu einer Drehachse des Drehkranzes anzuordnen.

In Weiterbildung der Erfindung weist das Sägeaggregat einen Zustellschlitten auf, mittels dem das Sägeblatt in radialer Richtung des Drehkranzes verschiebbar ist.

Ein solcher Zustellschlitten, der das Sägeaggregat mit dem Drehkranz verbindet, erhöht die Flexibilität der erfindungsgemäßen Drehkranzeinheit weiter. Um das Sägeblatt beim Sägen an einem zu bearbeitenden Profil vorbeizuführen, ein sogenannter Radialschnitt, kann der Zustellschlitten verwendet werden und es ist dadurch nicht erforderlich, den vollständigen Drehkranz zu verschieben. Dadurch können auch Profile mit sehr großem Querschnitt in der Drehkranzeinheit bearbeitet werden, die so groß sind, dass der Drehkranz nicht ausreichend weit verschoben werden könnte, um eine vollständige Profilseite mit dem Sägeblatt durchzuschneiden.

In Weiterbildung der Erfindung ist der Drehkranz mittels zweier Zustellschlitten in einer Ebene verschiebbar, die senkrecht zu seiner Drehachse liegt.

Durch die Verschiebung des Drehkranzes selbst kann ein zu bearbeitendes Profil außermittig zum Drehpunkt des Drehkranzes angeordnet werden. Dadurch kann bei der Bearbeitung eine noch höhere Flexibilität erzielt werden.

Das der Erfindung zugrunde liegende Problem wird auch durch ein Verfahren zum Bearbeiten von Profilen gemäß Anspruch 11 mit einem Profilbearbeitungszentrum mit einer Drehkranzeinheit und einem an der Drehkranzeinheit angeordneten Sägeaggregat mit folgenden Schritten gelöst:
Anordnen eines Sägeblatts des Sägeaggregats in einer vorgesehenen Schnittebene mittels Verschwenken des Sägeblatts wenigstens um eine erste, senkrecht zu einer Drehachse des Drehkranzes liegenden Schwenkachse und mittels Verdrehen des Drehkranzes mit dem Sägeaggregat, sowie Zustellen des Sägeblatts in Richtung (y, z) auf ein zu bearbeitendes Profil und/oder Verschieben eines zu bearbeitenden Profils in oder entgegen einer Durchlaufrichtung (x) des Profils durch den Drehkranz.

Indem ein Sägeblatt mittels Verschwenken des Sägeblatts und mittels Verdrehen des Drehkranzes in einer vorgesehenen Schnittebene angeordnet wird und indem zusätzlich während eines Sägevorgangs das Sägeblatt in Richtung auf ein zu bearbeitendes Profil zugestellt wird oder ein zu bearbeitendes Profil in oder entgegen einer Durchlaufrichtung des Profils bewegt wird, wird eine Vielzahl auch äußerst komplizierter Sägebearbeitungen an einem zu bearbeitenden Profil möglich.

In Weiterbildung der Erfindung ist das gleichzeitige Zustellen des Sägeblatts in Richtung (y, z) auf ein zu bearbeitendes Profil und Verschieben des Profils in oder entgegen einer Durchlaufrichtung (x) des Profils durch den Drehkranz vorgesehen.

Auf diese Weise kann durch die Überlagerung der Bewegung des Profils in oder entgegen einer Durchlaufrichtung (x) und dem Zustellen des Sägeblatts senkrecht hierzu (y, z) eine Schnittbewegung in allen drei Raumrichtungen erzielt werden. Dennoch wird der vergleichsweise einfache Aufbau eines lediglich in y- und z-Richtung zustellbaren Sägeblatts beibehalten.

In Weiterbildung der Erfindung wird das Sägeblatt in Durchlaufrichtung (y) wenigstens abschnittsweise vor einer Stirnseite eines zu bearbeitenden Profils angeordnet und das Profil wird dann in oder entgegen einer Durchlaufrichtung (x) des Profils durch den Drehkranz verschoben.

Auf diese Weise ist es möglich, an einer Stirnseite eines Profils Ausklinkungen, Längsschnitte, Längsnuten und dergleichen mit Hilfe des Sägeaggregats anzubringen.

In Weiterbildung der Erfindung ist das Verschieben von Werkstückspanneinrichtungen im Bereich des Drehkranzes in und entgegen einer Durchlaufrichtung (x) eines zu bearbeitenden Profils vorgesehen.

Durch Verschieben von Werkstückspanneinrichtungen kann Platz für eine vorgesehene Bearbeitung geschaffen werden, beispielsweise kann aber auch das Profil selbst während der Bearbeitung bewegt werden.

In Weiterbildung der Erfindung kann ein Ausrichten der ersten Schwenkachse in einer Weise erfolgen, dass die erste Schwenkachse das zu bearbeitende Profil schneidet, und nachfolgend kann das Sägeblatt parallel zur ersten Schwenkachse in Richtung (y, z) auf das zu bearbeitende Profil zugestellt werden.

Auf diese Weise kann ein sogenannter Stechschnitt ausgeführt werden, d.h. das Sägeblatt wird in Richtung der Schwenkachse ins Profil hinein bewegt.

In Weiterbildung der Erfindung ist das Ausrichten der ersten Schwenkachse in einer Weise vorgesehen, dass die erste Schwenkachse das zu bearbeitende Profil nicht schneidet und das Sägeblatt wird dann parallel zur ersten Schwenkachse in Richtung (y, z) auf das zu bearbeitende Profil zugestellt.

Auf diese Weise kann ein sogenannter Radialschnitt durchgeführt werden, bei dem also das Sägeblatt entlang einer Profilkante gezogen wird, um das Profil im Bereich dieser Kante durchzuschneiden. Die übrigen Profilkanten können dann beispielsweise nach einem Verdrehen des Drehkranzes mit dem Sägeaggregat und Durchführen eines erneuten Radialschnitts durchgeschnitten werden.

In Weiterbildung der Erfindung wird das Profil in oder entgegen der Durchlaufrichtung (x) während der Bearbeitung bewegt.

Auf diese Weise kann ein Sägeblatt durch Überlagerung der Bewegungen relativ zum Profil in allen drei Raumrichtungen bewegt werden.

In Weiterbildung der Erfindung ist das Verdrehen des Drehkranzes um einen definierten Winkel, insbesondere 90° oder 180°, nach einem ersten Sägevorgang und erneutes Zustellen des Sägeblatts parallel zur Schwenkachse während eines zweiten Sägevorgangs vorgesehen.

Auf diese Weise können Profile mit sehr großem Querschnitt, der nicht mehr in den Schnittbereich des Sägeblatts passt, durch zwei oder mehr separate Sägevorgänge vollständig abgetrennt werden.

Durch Verschwenken des Sägeblatts um seine Schwenkachse, die senkrecht zur Durchlaufrichtung (x) des Profils ausgerichtet ist, und nachfolgendes Verdrehen des Drehkranzes, kann das Sägeblatt in eine Schnittebene gelegt werden, die dann einen sogenannten Schifterschnitt oder Doppelgehrungsschnitt bewirkt. Die Bewegung des Sägeblatts durch das Profil hindurch während des Sägevorgangs erfolgt dann durch eine Überlagerung der Bewegung des Sägeblatts in y- und z-Richtung sowie eine Bewegung des Profils selbst in x-Richtung.

In Weiterbildung der Erfindung wird ein Verhältnis zwischen einem Schnittbereich des Sägeblatts und einer vorgesehenen Schnittfläche an einem zu bearbeitenden Profil bestimmt, wobei dann, wenn die vorgesehene Schnittfläche in den Schnittbereich des Sägeblatts passt, eine Ausrichtung der ersten Schwenkachse so erfolgt, dass diese das zu bearbeitende Profil schneidet, und wobei dann, wenn eine vorgesehene Schnittfläche nicht in den Sägebereich des Sägeblatts passt, eine Ausrichtung der ersten Schwenkachse so erfolgt, dass diese das zu bearbeitende Profil nicht schneidet und zwischen zwei Bearbeitungsvorgängen ein Verdrehen des Drehkranzes um einen definierten Winkel erfolgt.

Auf diese Weise kann je nach Querschnittsfläche und vorgesehener Schnittfläche an dem zu bearbeitenden Profil die optimale Einstellung und Abstimmung der Sägevorgänge erfolgen. Das Bestimmen des Verhältnisses zwischen einem Schnittbereich des Sägeblatts und einer vorgesehenen Schnittfläche sowie die nachfolgende Steuerung der Sägevorgänge kann in an und für sich bekannter Weise mittels einer elektronischen Steuereinheit erfolgen.

In Weiterbildung der Erfindung ist vorgesehen, eine Reihenfolge mehrerer Sägevorgänge, insbesondere beim Einbringen eines Klinkschnitts in das zu bearbeitende Profil, sowie eine Orientierung einer Drehrichtung des Sägeblatts relativ zu dem zu bearbeitenden Profil unter Berücksichtigung eines Späneabflugs und/oder einer Abflugrichtung eines mittels der Sägevorgänge abgetrennten Profilstücks zu bestimmen.

Die Entsorgung von Abfallstücken bei der Profilbearbeitung, die insbesondere beim Einbringen von Klinkschnitten von Bedeutung ist, ist generell problematisch. Nicht nur abfliegende Sägespäne sondern vor allem bei Klinkschnitten herausgetrennte Profilstücke müssen zum einen überhaupt entsorgt und weiter auch so aus dem Bearbeitungsbereich herausbewegt werden, dass sie nachfolgende Bearbeitungen nicht stören und auch nicht eine Profiloberfläche beschädigen. Bei dem erfindungsgemäßen Verfahren wird nun die äußerst hohe Flexibilität der Drehkranzeinheit in Bezug auf die Orientierung des Sägeblatts zu dem zu bearbeitenden Profil auch dahingehend genutzt, dass eine Reihenfolge mehrerer Sägevorgänge sowie eine Orientierung einer Drehrichtung des Sägeblatts so bestimmt wird, dass zum einen ein Späneabflug vorzugsweise bereits in Schwerkraftrichtung erfolgt und vor allem herausgetrennte Stücke vorzugsweise nach unten abfallen bzw. in Richtung eines bereitgestellten Abfallbehälters aus dem Bearbeitungsbereich herausbewegt werden. Üblicherweise wird eine Drehrichtung des Sägeblatts und eine Reihenfolge der Sägevorgänge so eingestellt, dass die Bewegung des Sägeblatts beim letzten, das Heraustrennen des Profilstücks bewirkenden Sägevorgang so eingestellt wird, dass sich das Sägeblatt im Bereich der Schnittfläche nach unten bewegt.

Weitere Merkmale und Vorteile der Erfindung ergeben sich aus den Ansprüchen sowie der nachfolgenden Beschreibung bevorzugter Ausführungsformen der Erfindung im Zusammenhang mit den Zeichnungen. Einzelmerkmale der unterschiedlichen, in den Zeichnungen dargestellten Ausführungsformen können dabei in beliebiger Weise miteinander kombiniert werden, ohne den Rahmen der Erfindung zu überschreiten. In den Zeichnungen zeigen:
- Fig. 1: eine schematische Vorderansicht einer erfindungsgemäßen Drehkranzeinheit,
- Fig. 2: eine schematische Draufsicht auf die Drehkranzeinheit der Fig. 1,
- Fig. 3A bis 3C: verschiedene Anordnungen des Sägeaggregats zum Durchführen von Trennschnitten unter einem Winkel von 90° an einem zu bearbeitenden Profil,
- Fig. 4A bis 4C: unterschiedliche Anordnungen der Drehkranzeinheit der Fig. 1 zum Durchführen von Trenn-, Keil- und Spitzenschnitten unter einem Winkel zwischen 0° und 90°,
- Fig. 5A und 5B: Anordnungen der Drehkranzeinheit der Fig. 1 zum Durchführen von Längsschnitten an einem zu bearbeitenden Profil,
- Fig. 6A und 6B: unterschiedliche Anordnungen der Drehkranzeinheit der Fig. 1 zum Durchführen von Endeinschnitten in ein zu bearbeitendes Profil,
- Fig. 7: eine Seitenansicht einer erfindungsgemäßen Drehkranzeinheit in einer ersten Position des Drehkranzes,
- Fig. 8: die Drehkranzeinheit der Fig. 7 in einer anderen Position der Drehkranzeinheit und
- Fig. 9A bis 9H: verschiedene Möglichkeiten von Sägebearbeitungen an einem Profil mit der erfindungsgemäßen Drehkranzeinheit.

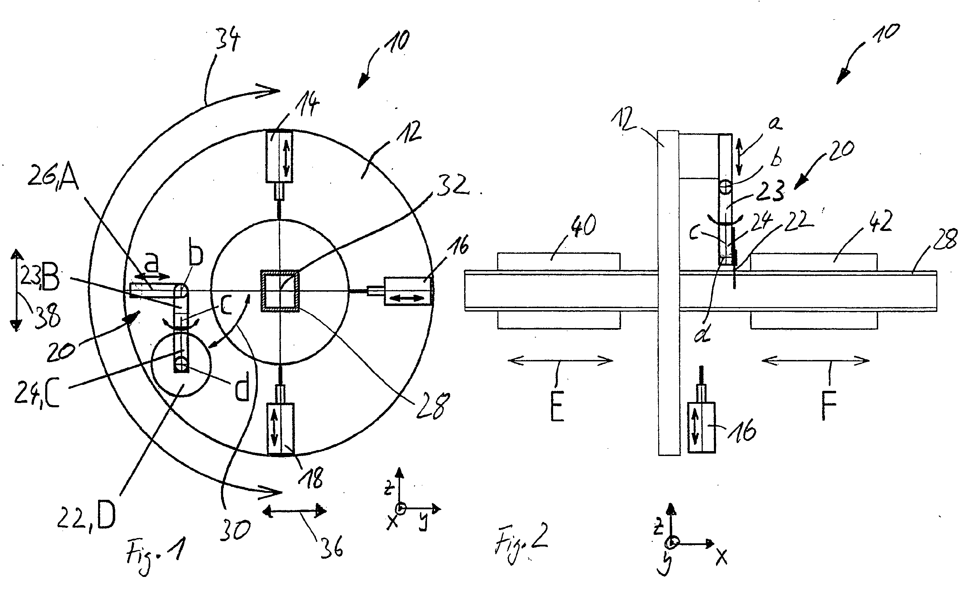

In der schematischen Ansicht der Fig. 1 ist eine Drehkranzeinheit 10 dargestellt, die einen Drehkranz 12 und insgesamt vier an dem Drehkranz angeordnete Bearbeitungswerkzeuge 14, 16, 18 und 20 aufweist. Die Bearbeitungswerkzeuge 14, 16 und 18 sind jeweils als Bohr- bzw. Fräsaggregate ausgebildet und können mittels eines nicht dargestellten Zustellschlittens in den Richtungen des jeweils eingezeichneten Doppelpfeils, also radial zum Drehkranz 12, bewegt werden. Der Drehkranz 12 in Form eines Kreisringes bildet somit eine Werkzeugaufnahmefläche für die Bearbeitungswerkzeuge 14, 16, 18 und 20.

Das Bearbeitungswerkzeug 20 ist als Sägeaggregat ausgebildet und weist ein kreisförmiges Sägeblatt 22, D auf, das drehbar an einem Sägekopf 24, C befestigt ist. Der Sägekopf 24, C ist schematisch als langgestreckter Arm ausgebildet und das Sägeblatt 22, D ist um eine Achse c schwenkbar sowie um seine Drehachse d drehbar. Der Sägekopf 24 C ist an einem Schwenkarm 23, B angeordnet, der um eine Schwenkachse b relativ zu einem Basisteil 26, A verschwenkbar ist. Das Basisteil 26, A ist mittels eines Zustellschlittens in den Richtungen des Doppelpfeils a bewegbar, also radial zum Drehkranz 12.

Um mittels des Sägeaggregats 20 ein Profil 28 zu bearbeiten, wird zunächst der Schenkarm 23, B zusammen mit dem Sägekopf 24 um die Schwenkachse b entlang dem Doppelpfeil 30 verschwenkt, bis die Schwenkachse c in radialer Richtung zum Drehkranz 12 ausgerichtet ist. Die Schwenkachse c steht dann senkrecht auf einer Drehachse 32 des Drehkranzes 12. Die Drehachse 32 fällt in der Darstellung der Fig. 1 mit einer Durchlaufrichtung des zu bearbeitenden Profils 28 durch den Drehkranz 12 zusammen und wird als x-Richtung bezeichnet. Der Drehkranz 12 ist um seine Drehachse 32 drehbar, die durch einen gekrümmten Doppelpfeil 34 angeordnet ist. Mittels nicht dargestellter Zustellschlitten kann der Drehkranz 12 darüber hinaus in den Richtungen der Doppelpfeile 36 und 38 bewegt werden, entsprechend einer Bewegung in der y-Ebene bzw. z-Ebene.

Nach dem Verschwenken des Sägekopfes 24, so dass die Schwenkachse c radial zum Drehkranz 12 ausgerichtet ist, kann das Sägeblatt 22 dann mittels des Zustellschlittens an dem Basisteil 26 in Richtung a in Richtung auf das zu bearbeitende Profil 28 zugestellt werden oder der Drehkranz 12 wird insgesamt in y- oder z-Richtung verschoben, um das Sägeblatt 22 linear relativ zum zu bearbeitenden Profil 28 zu bewegen.

Die Darstellung der Fig. 2 zeigt in einer schematischen Seitenansicht die Drehkranzeinheit 10 der Fig. 1. Der Sägekopf 24 ist in die Stellung verschwenkt worden, in der die Schwenkachse c radial zum Drehkranz 12 ausgerichtet ist. Das Sägeblatt 22 befindet sich abschnittsweise oberhalb des Profils 28 und ist abschnittsweise bereits in das Profil 28 eingetaucht. Durch eine Bewegung des Drehkranzes 12 entgegen der z-Richtung kann das Sägeblatt somit in Richtung auf das Profil 28 zugestellt werden und das Profil 28 kann dadurch bis zur Hälfte durchgeschnitten werden. Um das Profil 28 vollständig durchzuschneiden, müsste in der Darstellung der Fig. 2 der Drehkranz 12 nach der Bearbeitung um etwa 180° verschwenkt werden, so dass in der Darstellung der Fig. 2 das Sägeblatt 22 unterhalb des unten dargestellten Bereichs des Profil 28 zu liegen kommt. Eine erneute Bewegung des Drehkranzes 12 in z-Richtung kann dann dazu verwendet werden, um das Profil 28 vollständig durchzutrennen.

Während der Sägevorgänge wird das Profil 28 mittels zweier Werkstückauflagen und -spanneinrichtungen 40 und 42 gehalten. Die Werkstückauflagen 40, 42 sind jeweils in den Richtungen der Doppelpfeile E und F verschiebbar, also in und entgegen der y-Richtung. Die Werkstückauflagen 40, 42 weisen Auflagerollen und Spannrollen auf, um das Profil 28 während der Bearbeitung sicher gegen eine Verschiebung in y- und z-Richtung zu halten. Die Auflagerollen unterhalb und Spannrollen oberhalb des Profils 28 können entweder blockiert werden oder es sind zusätzlich Spannstücke vorgesehen, mit denen das Profil 28 während der Bearbeitung unverrückbar festgehalten wird. Nach erfolgter Bearbeitung werden diese Spannstücke vom Profil 28 abgehoben und das bearbeitete Profil 28 kann über die Auflagerollen und Spannrollen austransportiert werden, die hierzu gegebenenfalls angetrieben sind, und ein neues zu bearbeitendes Profilstück wird in den Bearbeitungsbereich verschoben.

Eine Durchlaufrichtung des Profils 28 durch den Drehkranz 12 verläuft in x-Richtung. Das Sägeaggregat 20 ist somit in Durchlaufrichtung x gesehen stromabwärts des Drehkranzes 12 und auch stromabwärts eines Bearbeitungsbereichs angeordnet, in dem die weiteren Bearbeitungswerkzeuge 14, 16, 18 eine Bearbeitung vornehmen. Bei einer Verschiebung des Sägeaggregats 20 relativ zum Drehkranz und auch bei einem Ausschwenken des Sägekopfs 24 um die Schwenkachse b, siehe Fig. 1, ist dadurch nicht zu befürchten, dass das Sägeblatt die übrigen Bearbeitungswerkzeuge 14, 16, 18 berührt oder die Bewegung des Sägeblatts durch sonstige Bestandteile der Drehkranzeinheit 10 behindert wird.

Die Werkstückauflagen und -spanneinrichtungen 40, 42 werden auch, je nachdem, ob eine Bearbeitung mittels der rotierenden Bearbeitungswerkzeuge 14, 16, 18 oder mit dem Sägeaggregat 20 vorgenommen wird, in eine geeignete Position verfahren, um das Profil 28 jeweils möglichst nahe am Bearbeitungsbereich zu spannen.

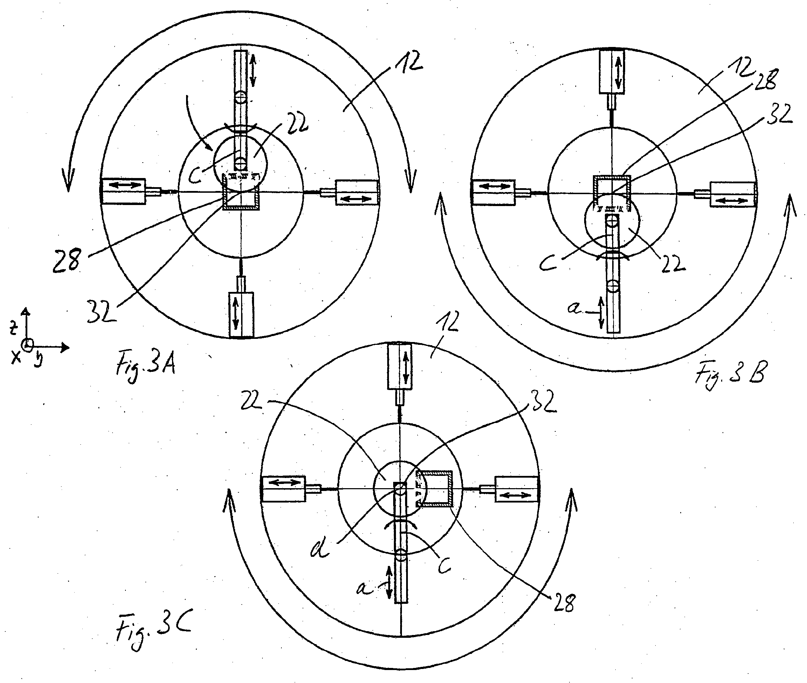

Die Darstellungen der Fig. 3A, 3B und 3C zeigen jeweils Trennschnitte, bei denen das Sägeblatt 22 in einem Winkel von 90° zur Durchlaufrichtung x bzw. zur Drehachse 32 des Drehkranzes 12 ausgerichtet ist. Das Profil wird dadurch senkrecht zu seiner Längsachse abgeschnitten.

Gemäß Fig. 3A wird ein Trennschnitt unter einem Winkel von 90° als sogenannter Stechschnitt ausgeführt, indem das Sägeblatt 22 in radialer Richtung des Drehkranzes 12 in das Profil 28 hineinbewegt wird. Zusätzlich kann der Drehkranz 12 noch in und entgegen der y-Richtung bewegt werden, um das Profil bis zu seiner Hälfte durchzuschneiden.

Fig. 3B zeigt das Sägeblatt 22 nach einer Verdrehung des Drehkranzes ausgehend von der Position der Fig. 3A in einem Winkel von 180°. Das Sägeblatt 22 ist nun unterhalb des Profils 28 angeordnet und kann aus dieser Position heraus das Profil 28 bis zur Hälfte durchtrennen.

Die Darstellung der Fig. 3C zeigt eine Anordnung des Sägeblatts 22 so, dass die Drehachse d des Sägeblatts 22 mit der Drehachse 32 des Drehkranzes 12 zusammenfällt. Gegenüber der Position der Fig. 3B wurde das Sägeblatt 22 somit relativ zum Drehkranz 12 und in radialer Richtung hierzu, also parallel zum Doppelpfeil a, in Richtung auf die Mitte des Drehkranzes 12 zu bewegt. Gleichzeitig wurde der Drehkranz 12 entgegen der y-Richtung verschoben, so dass nun das Profil 28 nicht mehr konzentrisch zum Drehkranz 12 angeordnet, sondern seitlich, neben der Drehachse 32 des Drehkranzes 12, liegt. Auch in der in Fig. 3C gezeigten Position des Sägeblatts 22 kann nun ein Stechschnitt durchgeführt werden, indem das Sägeblatt 22 zusammen mit dem Drehkranz 12 in y-Richtung bewegt und dadurch auf das Profil 28 zugestellt wird. Alternativ wird ein Radialschnitt durchgeführt, bei dem das Sägeblatt 22 in oder entgegen der z-Richtung bewegt wird.

Die Auswahl der Positionen des Sägeblatts relativ zum Profil 28 wird auch unter Berücksichtigung des Späneabfalls gewählt. Bevorzugt ist ein Späneabfall in Schwerkraftrichtung, also nach unten. Bei der Positionierung des Sägeblatts zum Durchführen von Trennschnitten wird somit auch die Drehrichtung des Sägeblatts und die Schwerkraftrichtung berücksichtigt.

Zum Durchführen von Stechschnitten und Radialschnitten sind neben den in den Fig. 3A, 3B und 3C gezeigten Positionen selbstverständlich auch noch andere Anordnungen des Sägeblatts relativ zum Profil 28 und zum Drehkranz 12 möglich. Die Fig. 3A, 3B und 3C zeigen lediglich beispielhaft drei mögliche Positionen zum Durchführen von Trennschnitten unter einem Winkel von 90° zwischen Sägeblatt und Längsachse des Profils 28.

In den Positionen des Sägeblatts 22 der Fig. 3A, 3B und 3C können, wie erwähnt, auch sogenannte Radialschnitte durchgeführt werden, bei denen das Sägeblatt 22 entlang den Richtungen des Doppelpfeils a bewegt wird oder der Drehkranz 12 insgesamt und dadurch zusammen mit dem Sägeblatt 22 in oder entgegen der y-Richtung und der z-Richtung bewegt wird. Bei einem solchen Radialschnitt wird das Sägeblatt in etwa radialer Richtung am Profil vorbeibewegt.

Es ist zu erkennen, dass die Schwenkachse des Sägekopfs c bei den Positionen der Fig. 3A und 3B das Profil 28 schneidet, wohingegen die Schwenkachse c in der Position der Fig. 3C das Profil 28 nicht schneidet.

Üblicherweise wird die Position der Fig. 3A oder 3B oder eine sonstige Position des Sägeblatts 22, bei der die Schwenkachse c das zu bearbeitende Profil 28 schneidet, dann gewählt, wenn eine vorgesehene Schnittfläche in den Sägebereich des Sägeblatts 22 passt. In einem solchen Fall kann das vollständige Profil dann mittels eines einzigen Stechschnitts durchtrennt werden. In den schematischen Darstellungen der Fig. 3A und 3B ist zur Verdeutlichung der Querschnitte des Profils 28 allerdings größer gewählt, so dass die vorgesehene Schnittfläche bei vollständiger Durchtrennung des Profils 28 nicht mehr in den Sägebereich des Sägeblatts 22 passt.

Wenn die vorgesehene Schnittfläche nicht in den Sägebereich des Sägeblatts 22 passt, wird der vorgesehene Schnitt durch zwei oder mehr Sägevorgänge durchgeführt, beispielsweise durch zwei Radialschnitte. Hierzu wird die Schwenkachse c so ausgerichtet wie in Fig. 3C, dass sie also das Profil 28 nicht schneidet. Das Profil 28 wird dann in einem ersten Sägevorgang teilweise durchtrennt, indem, wie beschrieben, das Sägeblatt 22 parallel zum Doppelpfeil a am Profil 28 entlang bewegt wird. Nach Durchführen eines ersten Sägevorgangs wird der Drehkranz 12 beispielsweise im Uhrzeigersinn um 90° verschwenkt, um die dann oben liegende Seite des Profils 28 zu durchtrennen. Das Profil 28 kann dadurch mittels insgesamt vier Sägevorgängen vollständig durchtrennt werden.

Wenn der Sägebereich des Sägeblatts 22 groß genug ist, um das Profil 28 mittels eines einzigen Radialschnitts mindestens bis zur Hälfte durchzutrennen, kann das Profil 28 selbstverständlich auch mittels lediglich zwei Radialschnitten vollständig durchtrennt werden.

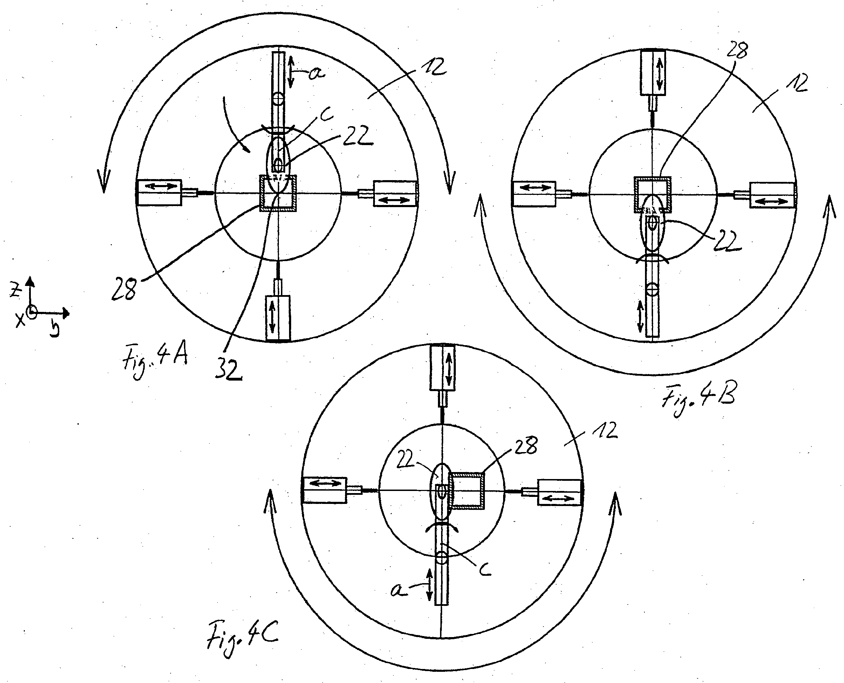

Die Darstellungen der Fig. 4A, 4B und 4C zeigen verschiedene Anordnungen des Drehkranzes 12 und des Sägeblatts 22 relativ zum Profil 28, wenn Trenn-, Keil- und Spitzenschnitte mit einem Winkel zwischen 0° und 90° zwischen Sägeblatt 22 und Längsachse des Profils 28 durchgeführt werden sollen.

Anhand der Darstellung in Fig. 4A ist zu erkennen, dass die Schwenkachse c radial auf den Drehkranz 12 ausgerichtet ist und die Schwenkachse c somit die Drehachse 32 des Drehkranzes 12 schneidet. Das Profil 28 ist so angeordnet, dass seine Mittellängsachse mit der Drehachse 32 zusammenfällt. Das Sägeblatt 22 ist in der in Fig. 4a dargestellten Stellung um 45° zur Mittellängsachse des Profils 28 angestellt. Wie in der Darstellung der Fig. 4A zu erkennen ist, ist das Profil 28 dabei zu groß, um mit einem einzigen Stechschnitt des Sägeblattes 22, also mit einer Bewegung des Sägeblatts 22 parallel zum Doppelpfeil a und in Richtung auf das Profil 28 zu, vollständig durchtrennt zu werden. Nach Anordnung des Sägeblatts 22 in der vorgesehenen Schnittebene muss daher gleichzeitig der Drehkranz 12 in y-Richtung und das Profil 28 in x-Richtung bewegt werden, um durch die Überlagerung dieser beiden Bewegungen die Wirkung zu erreichen, dass das Sägeblatt 22 sich unter einem Winkel von 45° schräg durch das Profil 28 hindurch bewegt.

Das Profil 28 wird während einer solchen Bewegung in oder entgegen der x-Richtung zweckmäßigerweise mittels eines nicht dargestellten Profilgreifers bewegt, der das Profil 28 in x-Richtung schiebt oder entgegen der x-Richtung zieht.

Um das Profil 28 nun vollständig unter einem Winkel von 45° zu durchtrennen, nimmt das Sägeblatt 22 dann durch eine Verdrehung des Drehkranzes 12 um 180° die in Fig. 4B dargestellte Position ein. Auch in dieser Position der Fig. 4B erfolgt wieder eine überlagerte Bewegung des Drehkranzes 12 in y-Richtung und des Profils 28 in x-Richtung, um zu bewirken, dass das Sägeblatt 22 das Profil 28 unter einem Winkel von 45° durchquert.

Die Darstellung der Fig. 4C zeigt eine Anordnung des Sägeblatts 22 relativ zum Profil 28, bei der die Schwenkachse c zwar radial zum Drehkranz 12 ausgerichtet ist, das Profil 28 aber nicht schneidet. In dieser Position des Sägeblatts 22 kann beispielsweise ein Radialschnitt durchgeführt werden, indem das Sägeblatt 22 parallel zum Doppelpfeil a in Richtung auf das Profil 28 zugestellt wird. Zum Durchführen eines weiteren Schnitts kann dann das Sägeblatt 22 beispielsweise um 90° um die Schwenkachse c verschwenkt werden, um in einer Seitenfläche des Profils 28 einen Keilschnitt anzubringen. Beispielsweise können aber auch Spitzenschnitte an dem Profil 28 angebracht werden.

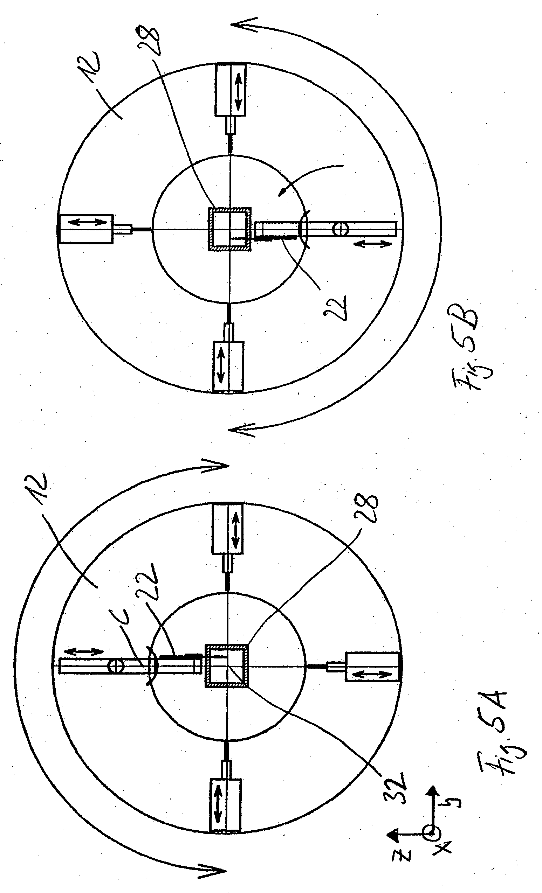

Die Darstellungen der Fig. 5A und 5B zeigen eine Position des Sägeblatts 22 und des Drehkranzes 12 relativ zum Profil 28, in denen Längsschnitte an dem Profil 28 angebracht werden können.

In der Darstellung der Fig. 5A fällt die Mittellängsachse des Profils 28 mit der Drehachse des Drehkranzes 12 zusammen und die Schwenkachse c ist radial zum Drehkranz 12 und so ausgerichtet, dass sie die Mittellängsachse des Profils 28 schneidet. Das Sägeblatt 22 ist dadurch seitlich leicht versetzt zur Mittellängsachse des Profils 28 angeordnet. In dieser Position des Sägeblatts 22 kann nun das Profil 28 in oder entgegen der x-Richtung bewegt werden, um einen Längsschnitt im Profil 28 vorzusehen.

Die Darstellung der Fig. 5B zeigt gegenüber der Darstellung der Fig. 5A die um 180° gedrehte Anordnung des Drehkranzes 12. In dieser Position kann mittels des Sägeblatts 22 in eine Unterseite des Profils 28 ein Längsschnitt eingebracht werden.

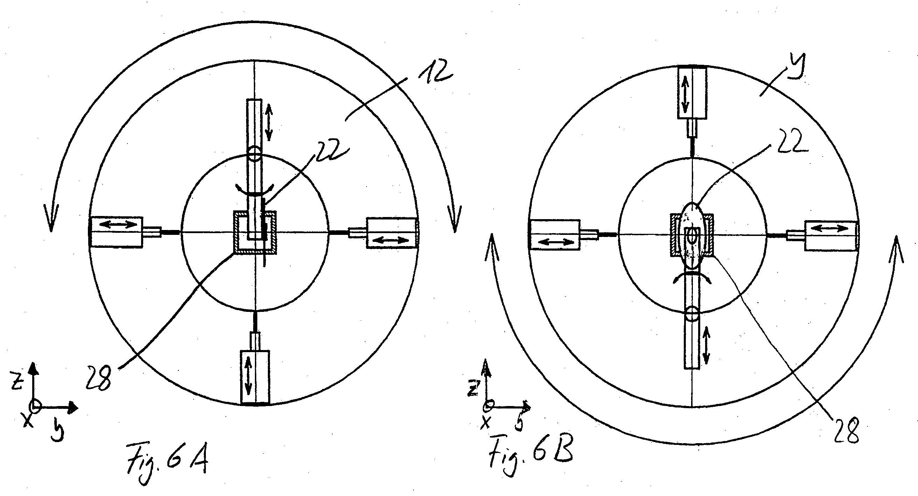

Die Darstellungen der Fig. 6A und 6B zeigen Positionen des Sägeblatts 22 bzw. des Drehkranzes 12 relativ zum Profil 28, in denen Endeinschnitte an dem Profil 28 vorgenommen werden können. Das Sägeblatt 22 wird hierzu vor einer Stirnseite des Profils 28 angeordnet. In der Darstellung der Fig. 6A ist das Sägeblatt parallel zur Durchlaufrichtung des Profils 28, also parallel zur x-Richtung, angeordnet, so dass ein Längseinschnitt in die Stirnseite des Profils 28 vorgenommen werden kann.

In der Darstellung der Fig. 6B ist das Sägeblatt 22 in einem Winkel von 45° zur Durchlaufrichtung des Profils 28, also zur x-Richtung, angeordnet. In dieser Position kann dann beispielsweise ein Anspitzen des Profils 28 oder ein keilförmiger Einschnitt in die Stirnseite des Profils 28 vorgenommen werden. Wie bereits erläutert wurde, wird eine Bewegung des Sägeblatts 22 innerhalb der vorgesehenen Schnittebene durch eine Überlagerung einer Bewegung des Drehkranzes 12 in oder entgegen der y-Richtung und/oder z-Richtung und einer Bewegung des Profils 28 in oder entgegen der x-Richtung erreicht.

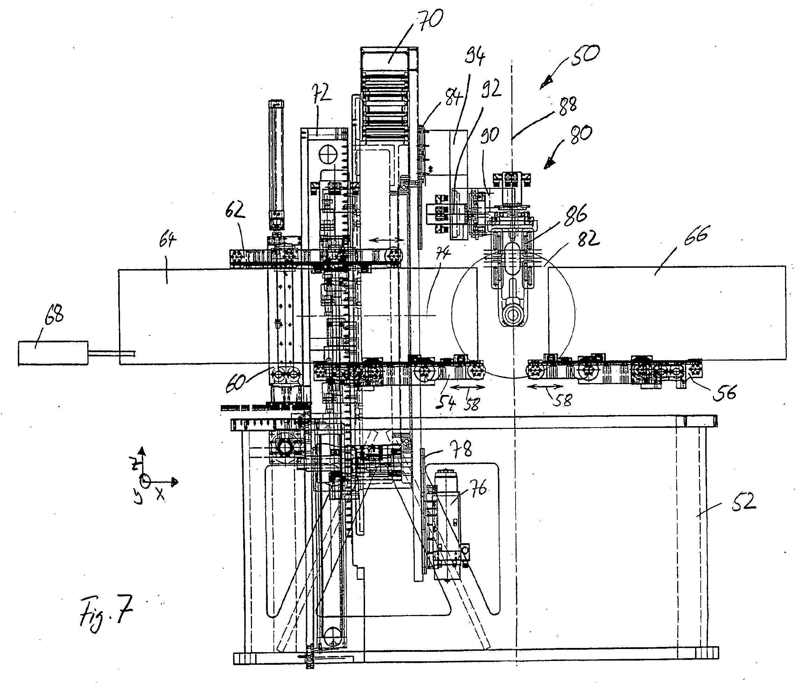

Die Darstellung der Fig. 7 zeigt eine Seitenansicht einer erfindungsgemäßen Drehkranzeinheit 50. Die Drehkranzeinheit 50 weist ein Maschinengestell 52 auf, an dem in nicht dargestellter Weise zwei Werkstückauflagen 54, 56 angeordnet sind. Die Werkstückauflagen 54, 56 sind jeweils so angeordnet, dass sie in den Richtungen der Doppelpfeile 58 relativ zum Maschinengestell 52 bewegt werden können, also in und entgegen der x-Richtung. An dem Maschinengestell 52 ist mittels eines Zustellschlittens 60 weiter eine Spanneinheit 62 höhenverstellbar angeordnet, die von oben her auf ein zu bearbeitendes Profilstück 64 bewegt werden kann, um dieses unverrückbar festzuhalten.

Die Werkstückauflagen 56, 54 sowie die Spanneinheit 62 sind mit Auflagerollen bzw. Spannrollen versehen, um im nicht gespannten Zustand einen Weitertransport des Profils 64 bzw. eines bereits bearbeiteten Profilstücks 66 zu erlauben. Eine Bewegung des zu bearbeitenden Profilstücks 64 während einer Sägebearbeitung ist auch dann erforderlich, wenn ein Längsschnitt oder ein Schrägschnitt in dem Profil vorgenommen werden soll. Hierzu wird dann die Spanneinheit 62 ein Stück weit vom Profil 64 abgehoben, so dass nur noch die Rollen in Kontakt mit dem Profil sind. In dieser Lage kann dann mittels eines lediglich schematisch dargestellten Profilgreifers 68 das Profil 64 in und entgegen der x-Richtung bewegt werden.

Die Drehkranzeinheit 50 weist weiter einen Drehkranz 70 auf, der mittels einer Lagereinheit 72 um eine Drehachse 74 drehbar zum Maschinengestell 52 angeordnet ist. In der dargestellten Position des Drehkranzes 70 fällt die Drehachse 74 mit einer Mittellängsachse der Profile 64, 66 zusammen.

Die Lagereinheit 72 ist mittels zweier in der Darstellung der Fig. 7 nicht erkennbarer Zustellschlitten in der y-, z-Ebene verschiebbar, in der Darstellung der Fig. 7 also in die Zeichenebene hinein und aus dieser heraus sowie nach unten bzw. nach oben.

An dem Drehkranz 70, der eine Werkzeugaufnahmeplatte bildet, ist ein erstes Bearbeitungswerkzeug 76 angeordnet, das als Bohr- bzw. Fräseinheit ausgebildet ist. Das Bearbeitungswerkzeug 76 ist mittels eines Zustellschlittens 78 radial zum Drehkranz 70 verstellbar, also in Richtung auf das zu bearbeitende Profil 64 zu und von diesem weg.

An dem Drehkranz ist darüber hinaus ein Sägeaggregat 80 mit einem drehbaren, kreisförmigen Sägeblatt 82 angeordnet. Das Sägeaggregat 80 ist mittels eines Zustellschlittens 84 in radialer Richtung zum Drehkranz 70 verstellbar. Das Sägeaggregat 80 weist weiter einen Sägekopf 86 auf, der einen Antriebsmotor und eine Antriebswelle für das Sägeblatt 82 trägt und der selbst um eine Schwenkachse 88 verschwenkbar ist. Das Sägeblatt 82 kann damit um die Schwenkachse 88 verdreht werden, um in einem beliebigen Winkel zu einer Mittellängsachse der Profile 64, 66 angeordnet zu werden. Der Sägekopf 86 ist an einem Schwenkarm 90 befestigt, der über eine Schwenkachse 92 mit einer auf dem Zustellschlitten 84 angeordneten Basis 94 verbunden ist. Mittels einer Schwenkbewegung um die Schwenkachse 92 kann dadurch der Sägekopf 86 in bzw. aus einem Bearbeitungsbereich herausgeschwenkt werden.

In der dargestellten Position ist das Sägeblatt 82 parallel zur Drehachse 74 und damit auch parallel zur Mittellängsachse der Profile 64, 66 angeordnet. Eine Bearbeitung des Profils 64 könnte mit dem Sägeblatt 82 demnach dahingehend vorgenommen werden, dass ein in Längsrichtung verlaufender Endeinschnitt im Profil 64 vorgenommen wird.

Das Profil 66 ist lediglich zur Verdeutlichung dargestellt, wäre während einer Sägebearbeitung des Profils 64 aber bereits nach rechts abtransportiert worden, um nicht gleichzeitig im Sägebereich des Sägeblatts 82 zu liegen.

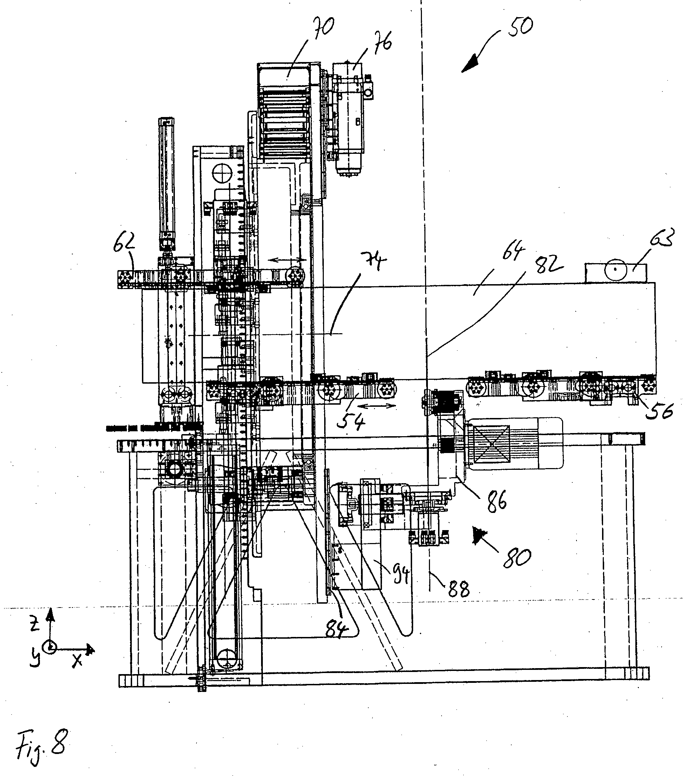

Die Darstellung der Fig. 8 zeigt die Drehkranzeinheit der Fig. 7 in einer gegenüber der Darstellung der Fig. 7 um 180° gedrehten Position des Drehkranzes 70, wobei zusätzlich auch das Sägeblatt 82 um die Achse 88 verschwenkt wurde. Wie ohne Weiteres zu erkennen ist, ist das Bearbeitungswerkzeug 76 nun oberhalb des Profils 64 angeordnet, wohingegen das Sägeaggregat 80 nun unterhalb des Profils 64 liegt. Darüber hinaus ist der Sägekopf 86 gegenüber der Position in Fig. 7 um 90° gedreht worden, so dass das Sägeblatt 82 nun senkrecht zur Drehachse 74 des Drehkranzes 70 und damit auch senkrecht zur Mittellängsachse des Profils 64 bzw. senkrecht zur x-Richtung angeordnet ist. In der dargestellten Position des Sägeblatts 82 könnte das Profil 64 somit zur Hälfte durchtrennt werden, indem zunächst der Sägekopf 86 mittels einer Bewegung des Basisteils 94 entlang dem Zustellschlitten 84 auf das Profil 64 in die dargestellte Position bewegt wird und dann der Drehkranz 70 insgesamt in y-Richtung verfahren wird, um an dem Profil 64 einen Radialschnitt vorzunehmen. Zur vollständigen Durchtrennung des Profils 64 könnte dann der Drehkranz 70 um 180° geschwenkt werden, um auch den in Fig. 8 oben liegenden Abschnitt des Profils 64 zu durchtrennen.

Zweckmäßigerweise wird bei einer solchen Bearbeitung das Profil 64 so gehalten, dass sowohl der in der Fig. 8 rechte Profilabschnitt als auch der in Fig. 8 links des Sägeblatts liegende Profilabschnitt sowohl von oben als auch von unten gehalten werden. In der Darstellung der Fig. 8 ist daher neben den Werkstückauflagen 54, 56 und der Spannvorrichtung 62 schematisch eine weitere Spannvorrichtung 63 oberhalb der Werkstückauflage 54 eingezeichnet.

Anhand der Darstellungen der Fig. 7 und Fig. 8 ist zu erkennen, dass durch eine Verdrehung des Drehkranzes 70 das Sägeblatt 82 allseitig an dem Profil 64 angreifen kann und somit in jede beliebige Seitenfläche des Profils 64 ein Sägeschnitt eingebracht werden kann.

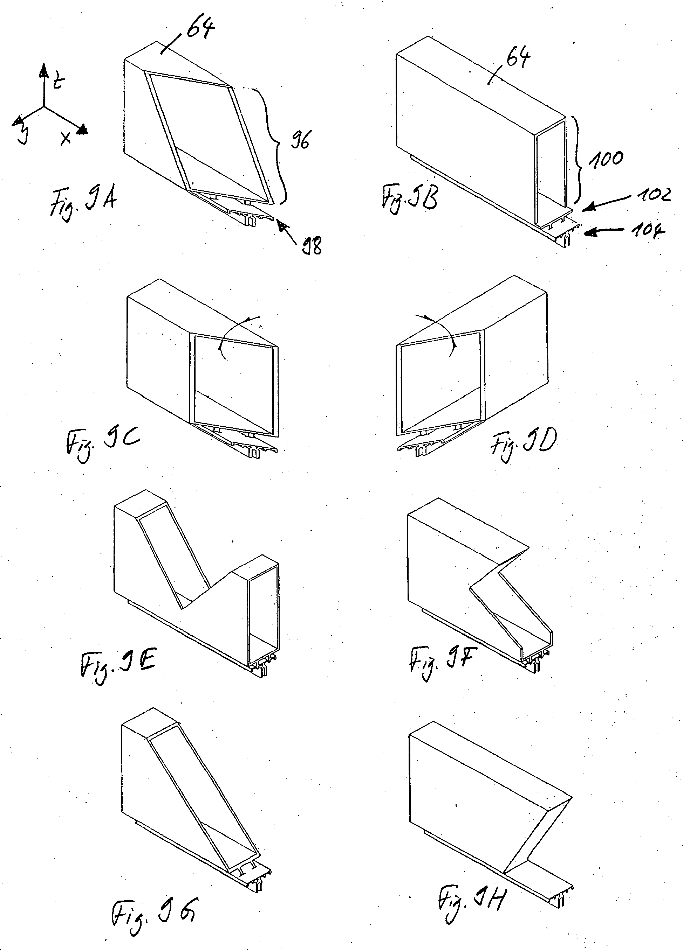

Die Darstellungen der Fig. 9A bis 9H zeigen beispielhaft Sägebearbeitungen an Profilen 64, die mit der erfindungsgemäßen Drehkranzeinheit vorgenommen werden können.

Die Fig. 9A zeigt ein Profil 64, das in einem Bereich 96 mit einem sogenannten Schifterschnitt oder Doppelgehrungsschnitt versehen ist. Hierzu wird das Sägeblatt 82 zunächst um die Schwenkachse 88 um den gewünschten Winkel verschwenkt und dann durch eine Drehung des Drehkranzes 70 um die Drehachse 74 in der gewünschten Schnittebene angeordnet. Eine Bewegung des Sägeblatts durch das Profil 64 hindurch wird dann mittels einer Überlagerung einer Bewegung des Profils 64 in x-Richtung sowie einer Bewegung des Sägeblatts in oder entgegen der y- und/oder z-Richtung bewirkt.

Zusätzlich ist das Profil 64 in einem Bereich 98 abgesetzt bzw. ausgeklinkt. Nach dem Durchtrennen des Bereichs 96 wird das Sägeblatt dann in einem anderen Winkel eingestellt, um den übrigen Abschnitt des Profils im Bereich 98 zu durchtrennen.

Die Darstellung der Fig. 9B zeigt ein Profil 64, das stufenartig abgesetzt ist. Ein erster Bereich des Profils 100 ist senkrecht zu einer Mittellängsachse des Profils 64 abgetrennt, auf diesen Bereich 100 folgen dann aber stufenförmig zwei weitere Bereiche 102, 104, die gegenüber dem Bereich 100 in Längsrichtung versetzt sind. Zur Herstellung dieses stufenförmigen Endes des Profils 64 können in dem Profil 64 zunächst Längsschnitte vorgenommen werden und abschließend werden die Trennschnitte vorgenommen.

Weitere Möglichkeiten für Ausklinkungen, keilförmige Einschnitte, abgesetzte Endflächen sind in den Darstellungen der Fig. 9C bis 9H dargestellt.

So zeigt Fig. 9C ein Profil, das mittels eines Gehrungsschnitts abgetrennt und zusätzlich stufenartig abgesetzt ist.

Fig. 9D zeigt ein spiegelbildlich zu Fig. 9C abgetrenntes Profil.

Fig. 9E zeigt ein Profilstück, in dem ein keilförmiger Einschnitt vorgesehen wurde, wobei sich dieser keilförmige Einschnitt ausgehend von einer Seitenwandung des Profils in dieses hinein erstreckt.

Fig. 9F zeigt ein Profil, das zunächst senkrecht zu seiner Längsachse abgetrennt und dann auf einem Teil seiner Stirnfläche mit einem keilförmigen Einschnitt versehen wurde.

Fig. 9G zeigt ein auf Gehrung geschnittenes Profil, das zusätzlich noch abgesetzt ist.

Fig. 9H zeigt ebenfalls ein mit einem Gehrungsschnitt versehenes Profil, wobei ein unterer Bereich des Profils stehen gelassen wurde.

## Patentansprüche

1. Drehkranzeinheit (10; 50) für ein Profilbearbeitungszentrum mit einem um eine Drehachse (32; 74) drehbaren Drehkranz (12; 70), wobei wenigstens ein Bearbeitungswerkzeug an dem Drehkranz (12; 70) angeordnet und eine Werkstückauflage (54, 56) für ein zu bearbeitendes Profil (28; 64, 66) im Bereich des Drehkranzes (12; 70) vorgesehen ist, wobei das wenigstens eine Bearbeitungswerkzeug ein Sägeaggregat (20; 80) ist and das Sägeaggregat (20; 80) einen Sägekopf (24; 86) mit einem am Sägekopf (24; 86) gelagerten Sägeblatt (22; 82) aufweist, wobei der Sägekopf (24; 86) drehbar um eine Schwenkachse (c; 88) relativ zum Drehkranz (12; 70) verschwenkbar ist **dadurch gekennzeichnet, dass** die Schwenkachse (c; 88) wenigstens während einer Sägebearbeitung senkrecht zu einer Drehachse (32; 74) des Drehkranzes (12; 70) angeordnet ist.

2. Drehkranzeinheit nach Anspruch 1, **dadurch gekennzeichnet, dass** das Sägeblatt (22; 82) des Sägeaggregats (20; 80) relativ zu der Werkstückauflage (54; 56) für das zu bearbeitendes Profil (28; 64, 66) mittels einer Drehung des Drehkranzes (12; 70) um wenigstens 360 Grad verschwenkbar ist.

3. Drehkranzeinheit nach einem der vorstehenden Ansprüche, **dadurch gekennzeichnet, dass** das Sägeaggregat (20; 80) so ausgebildet ist, dass das Sägeblatt (22; 82) in Durchlaufrichtung des zu bearbeitenden Profils (28; 64, 66) gesehen vor einer Stirnseite des Profils (28; 64, 66) zu deren Bearbeitung anordenbar ist.

4. Drehkranzeinheit nach einem der vorstehenden. Ansprüche, **dadurch gekennzeichnet, dass** das Sägeblatt (22; 82) des Sägeaggregates (20; 80) relativ zu einer Ebene des Drehkranzes (12; 70) in oder entgegen einer Durchlaufrichtung des zu bearbeitenden Profils (28; 64, 66) versetzt angeordnet ist.

5. Drehkranzeinheit nach Anspruch 4, **dadurch gekennzeichnet, dass** das Sägeblatt (22; 82) in einer Durchlaufrichtung des zu bearbeitenden Profils (28; 64, 66) gesehen stromabwärts der Ebene des Drehkranzes (12; 70) angeordnet ist.

6. Drehkranzeinheit nach einem der vorstehenden Ansprüche, **dadurch gekennzeichnet, dass** ein Profilgreifer (68) oder ein Antriebsmittel vorgesehen ist, um das zu bearbeitendes Profil (64) während der Bearbeitung in oder entgegen einer Durchlaufrichtung (x) zu bewegen.

7. Drehkranzeinheit nach einem der vorstehenden Ansprüche, **dadurch gekennzeichnet, dass** im Bereich des Drehkranzes (12; 70) wenigstens zwei Werkstückauflagen (54, 56) mit Spanneinrichtungen (62) vorgesehen sind, wobei die Werkstückauflagen (54, 56) in und entgegen einer Durchlaufrichtung (x) verschiebbar sind.

8. Drehkranzeinheit nach einem der vorstehenden Ansprüche, **dadurch gekennzeichnet, dass** das Sägeaggregat (20; 80) einen Schwenkarm (23; 90) aufweist, der den Drehkranz (12; 70) mit dem Sägekopf (24) verbindet und dessen Schwenkachse (b; 92) parallel zu einer Drehachse (32; 74) des Drehkranzes (12; 70) angeordnet ist, wobei das Sägeblatt (22; 82) mittels des Schwenkarms (23; 90) in einen Bearbeitungsbereich hinein und aus dem Bearbeitungsbereich heraus verschwenkbar ist.

9. Drehkranzeinheit nach einem der vorstehenden Ansprüche, **dadurch gekennzeichnet, dass** das Sägeaggregat (20; 80) einen Zustellschlitten (26; 84) aufweist, mittels dem das Sägeblatt (22; 82) in radialer Richtung des Drehkranzes (12; 70) verschiebbar ist.

10. Drehkranzeinheit nach einem der vorstehenden Ansprüche, **dadurch gekennzeichnet, dass** der Drehkranz (12; 70) mittels zweier Zustellschlitten in einer Ebene (y. z) verschiebbar ist, die senkrecht zu seiner Drehachse (32; 74) liegt.

11. Verfahren zum Bearbeiten von Profilen mit einem Profilbearbeitungszentrum mit einer Drehkranzeinheit (10; 50) und einem an der Drehkranzeinheit (10; 50) angeordneten Sägeaggregat (20; 80), mit folgenden Schritten: Anordnen eines Sägeblatts (22; 82) des Sägeaggregats (20; 80) in einer vorgesehenen Schnittebene mittels Verschwenken des Sägeblatts (22; 82) wenigstens um eine erste, während eines Sägevorgangs senkrecht zu einer Drehachse (32; 74) des Drehkranzes (12; 70) liegenden Schwenkachse (c, 88) und mittels Verdrehen des Drehkranzes (12; 70) mit dem Sägeaggregat (20; 80), sowie Zustellen des Sägeblatts (22; 82) in Richtung (y, z) auf ein zu bearbeitendes Profil (28; 64) und/oder Verschieben eines zu bearbeitenden Profils (28; 64) in oder entgegen einer Durchlaufrichtung (x) des Profils durch den Drehkranz (12; 70).

12. Verfahren nach Anspruch 11, **gekennzeichnet durch** gleichzeitiges Zustellen des Sägeblatts (22; 82) in Richtung (y, z) auf das zu bearbeitendes Profil (28; 64) und Verschieben des zu bearbeitenden Profils (28; 64) in oder entgegen einer Durchlaufrichtung (x) des Profils (28; 64) **durch** den Drehkranz (12; 70).

13. Verfahren nach einem der Ansprüche 11 oder 12, **gekennzeichnet durch** Bestimmen eines Verhältnisses zwischen einem Schnittbereich des Sägeblatts (22; 82) und einer vorgesehenen Schnittfläche an dem zu bearbeitenden Profil (28; 64), wobei dann, wenn die vorgesehene Schnittfläche in den Schnittbereich des Sägeblatts (22; 82) passt, eine Ausrichtung der ersten Schwenkachse (c, 88) so erfolgt, dass diese das zu bearbeitende Profil (28; 64) schneidet, und wobei dann, wenn eine vorgesehene Schnittfläche nicht in den Sägebereich des Sägeblatts (22; 82) passt, eine Ausrichtung der ersten Schwenkachse (c, 88) so erfolgt, dass diese das zu bearbeitende Profil (28; 64) nicht schneidet und zwischen zwei Bearbeitungsvorgängen ein Verdrehen des Drehkranzes (12; 70) um einen definierten Winkel erfolgt.

14. Verfahren nach einem der Ansprüche 11 bis 13, **gekennzeichnet durch** Bestimmen einer Reihenfolge mehrerer Sägevorgänge, insbesondere zum Einbringen eines Klinkschnitts, sowie einer Orientierung einer Drehrichtung des Sägeblatts (22; 82) relativ zu dem zu bearbeitenden Profil (28, 64) unter Berücksichtigung eines Späneabflugs und/oder einer Abflugrichtung eines mittels der Sägevorgänge abgetrennten Profilstücks.

## Claims

1. Rotating ring unit (10; 50) for a profile machining centre, comprising a slew ring (12; 70) rotatable about a rotational axis (32; 74), wherein at least one machining tool is disposed on the slew ring (12; 70) and a workpiece support (54, 56) for a profile (28; 64, 66) to be machined is provided in the vicinity of the slew ring (12; 70), wherein the at least one machining tool is a saw assembly (20; 80) and the saw assembly (20; 80) has a saw head (24; 86) with a sawing blade (22; 82) supported on the saw head (24; 86), wherein the saw head (24; 86) is pivotable relative to the slew ring (12; 70) rotatable about a pivot axis (c; 88), **characterized in that** the pivot axis (c; 88) is disposed perpendicular to a rotational axis (32; 74) of the slew ring (12; 70) at least during a sawing procedure.

2. Rotating ring unit according to claim 1, **characterized in that** the sawing blade (22; 82) of the saw assembly (20; 80) is pivotable about at least 360 degrees relative to the workpiece support (54; 56) for the profile (28; 64, 66) to be machined by means of a turning of the slew ring (12; 70).

3. Rotating ring unit according to any one of the preceding claims, **characterized in that** the saw assembly (20; 80) is configured such that the sawing blade (22; 82), as seen in the advancement direction of the profile (28; 64, 66) to be machined, is arrangeable in front of an end face of the profile (28; 64, 66) for machining said face.

4. Rotating ring unit according to any one of the preceding claims, **characterized in that** the sawing blade (22; 82) of the saw assembly (20; 80) is arranged offset relative to a plane of the slew ring (12; 70) in or counter an advancement direction of the profile (28; 64, 66) to be machined.

5. Rotating ring unit according to claim 4, **characterized in that** the sawing blade (22; 82), as seen in an advancement direction of the profile (28; 64, 66) to be machined, is arranged downstream of the plane of the slew ring (12; 70).

6. Rotating ring unit according to any one of the preceding claims, **characterized in that** a profile grab (68) or a drive means is provided in order to move the profile (64) to be machined during the machining procedure in or counter an advancement direction (x).

7. Rotating ring unit according to any one of the preceding claims, **characterized in that** in the vicinity of the slew ring (12; 70) at least two workpiece supports (54, 56) having clamping devices (62) are provided, wherein the workpiece supports (54, 56) are displaceable in and counter an advancement direction (x).

8. Rotating ring unit according to any one of the preceding claims, **characterized in that** the saw assembly (20; 80) has a pivot arm (23; 90) connecting the slew ring (12; 70) to the saw head (24) and the pivot axis (b; 92) thereof is disposed parallel to a rotational axis (32; 74) of the slew ring (12; 70), wherein the sawing blade (22; 82) is pivotable by means of the pivot arm (23; 90) into a machining area and out of the machining area.

9. Rotating ring unit according to any one of the preceding claims, **characterized in that** the saw assembly (20; 80) has an infeed slide (26; 84) by means of which the sawing blade (22; 82) is displaceable in the radial direction of the slew ring (12; 70).

10. Rotating ring unit according to any one of the preceding claims, **characterized in that** the slew ring (12; 70) is displaceable by means of two infeed slides in a plane (y, z) which is perpendicular to its rotational axis (32; 74).

11. Method for machining profiles using a profile machining centre, comprising a rotating ring unit (10; 50) and a saw assembly (20; 80) arranged on the rotating ring unit (10; 50), the method comprising the following steps: arranging a sawing blade (22; 82) of the saw assembly (20; 80) in an intended sectional plane by means of pivoting the sawing blade (22; 82) at least about a first pivot axis (c, 88), disposed perpendicular to a rotational axis (32; 74) of the slew ring (12; 70) at least during a sawing procedure, and by means of turning the slew ring (12; 70) with the saw assembly (20; 80), and feeding the sawing blade (22; 82) in the direction (y, z) towards a profile (28; 64) to be machined and/or displacing a profile (28; 64) to be machined in or counter an advancement direction (x) of the profile through the slew ring (12; 70).

12. Method according to claim 11, **characterized by** simultaneous feeding of the sawing blade (22; 82) in the direction (y, z) towards the profile (28; 64) to be machined and displacing the profile (28; 64) to be machined in or counter an advancement direction (x) of the profile (28; 64) through the slew ring (12; 70).

13. Method according to any of claims 11 or 12, **characterized by** determining of a ratio of a cutting range of the sawing blade (22; 82) to an intended cutting surface on the profile (28; 64) to be machined, wherein if the intended cutting surface matches the cutting range of the sawing blade (22; 82), then the first pivot axis (c, 88) is oriented such that said axis intersects the profile (28; 64) to be machined, and wherein if an intended cutting surface does not match the sawing range of the sawing blade (22; 82), then the first pivot axis (c, 88) is oriented such that said axis does not intersect the profile (28; 64) to be machined, and turning of the slew ring (12; 70) about a defined angle is performed between two machining procedures.

14. Method according to any of claims 11 to 13, **characterized by** determining of a sequence of a plurality of sawing procedures, in particular for applying a notching cut, and an orientation of a turning direction of the sawing blade (22; 82) relative to the profile (28; 64) to be machined considering flying chips and/or a flying direction of a length of profile severed by means of the sawing procedures.

## Revendications

1. Unité de couronne rotative (10; 50) pour un centre d'usinage de profilés comprenant une couronne rotative (12; 70) pouvant tourner autour d'un axe de rotation (32; 74), au moins un outil d'usinage étant disposé sur la couronne rotative (12; 70) et un porte-pièce (54, 56) étant prévu pour un profilé à usiner (28; 64, 66) dans la région de la couronne rotative (12; 70), l'au moins un outil d'usinage étant une unité de scie (20; 80) et l'unité de scie (20; 80) présentant une tête de scie (24; 86) avec une lame de scie (22; 82) supportée sur la tête de scie (24; 86), la tête de scie (24; 86) pouvant pivoter de manière rotative autour d'un axe de pivotement (c; 88) par rapport à la couronne rotative (12; 70), **caractérisée en ce que** l'axe de pivotement (c; 88) est disposé, au moins pendant un usinage à la scie, perpendiculairement à un axe de rotation (32; 74) de la couronne rotative (12; 70).

2. Unité de couronne rotative selon la revendication 1, **caractérisée en ce que** la lame de scie (22; 82) de l'unité de scie (20; 80) peut pivoter par rapport au porte-pièce (54; 56) pour le profilé à usiner (28; 64, 66) au moyen d'une rotation de la couronne rotative (12; 70) d'au moins 360 degrés.

3. Unité de couronne rotative selon l'une quelconque des revendications précédentes, **caractérisée en ce que** l'unité de scie (20; 80) est réalisée de telle sorte que la lame de scie (22; 82), vue dans la direction d'avance du profilé à usiner (28; 64, 66), peut être disposée devant un côté frontal du profilé (28; 64, 66) en vue de son usinage.

4. Unité de couronne rotative selon l'une quelconque des revendications précédentes, **caractérisée en ce que** la lame de scie (22; 82) de l'unité de scie (20; 80) est disposée de manière décalée par rapport à un plan de la couronne rotative (12; 70) dans une direction de passage du profilé à usiner (28; 64, 66) ou dans la direction inverse.

5. Unité de couronne rotative selon la revendication 4, **caractérisée en ce que** la lame de scie (22; 82), vue dans une direction de passage du profilé à usiner (28; 64, 66), est disposée en aval du plan de la couronne rotative (12; 70).

6. Unité de couronne rotative selon l'une quelconque des revendications précédentes, **caractérisée en ce qu'**un dispositif de préhension de profilés (68) ou un moyen d'entraînement est prévu, afin de déplacer le profilé à usiner (64) pendant l'usinage dans une direction de passage (x) ou dans la direction inverse.

7. Unité de couronne rotative selon l'une quelconque des revendications précédentes, **caractérisée en ce que** dans la région de la couronne rotative (12; 70) sont prévus au moins deux porte-pièces (54, 56) avec des dispositifs de serrage (62), les porte-pièces (54, 56) pouvant être déplacés dans une direction de passage (x) et dans la direction inverse.

8. Unité de couronne rotative selon l'une quelconque des revendications précédentes, **caractérisée en ce que** l'unité de scie (20; 80) présente un bras pivotant (23; 90) qui relie la couronne rotative (12; 70) à la tête de scie (24), et dont l'axe de pivotement (b; 92) est disposé parallèlement à un axe de rotation (32; 74) de la couronne rotative (12; 70), la lame de scie (22; 82) pouvant pivoter au moyen du bras pivotant (23; 90) dans une région d'usinage et hors de celle-ci.

9. Unité de couronne rotative selon l'une quelconque des revendications précédentes, **caractérisée en ce que** l'unité de scie (20; 80) présente un chariot d'avance (26; 84) au moyen duquel la lame de scie (22; 82) peut être déplacée dans la direction radiale de la couronne rotative (12; 70).

10. Unité de couronne rotative selon l'une quelconque des revendications précédentes, **caractérisée en ce que** la couronne rotative (12; 70) peut être déplacée au moyen de deux chariots d'avance dans un plan (y, z), qui est perpendiculaire à son axe de rotation (32; 74).

11. Procédé d'usinage de profilés comprenant un centre d'usinage de profilés comprenant une unité de couronne rotative (10; 50) et une unité de scie (20; 80) disposée au niveau de l'unité de couronne rotative (10; 50), comprenant les étapes suivantes : agencer une lame de scie (22; 82) de l'unité de scie (20; 80) dans un plan de coupe prévu, au moyen d'un pivotement de la lame de scie (22; 82) au moins autour d'un premier axe de pivotement (c, 88) situé, pendant une opération de sciage, perpendiculairement à un axe de rotation (32; 74) de la couronne rotative (12; 70), et au moyen d'une rotation de la couronne rotative (12; 70) avec l'unité de scie (20; 80), ainsi qu'avancer la lame de scie (22; 82) dans la direction (y, z) vers un profilé à usiner (28; 64) et/ou déplacer un profilé à usiner (28; 64) dans une direction de passage (x) du profilé, ou dans la direction inverse, à travers la couronne rotative (12; 70).

12. Procédé selon la revendication 11, **caractérisé par** l'avance de la lame de scie (22; 82) dans la direction (y, z) vers le profilé à usiner (28; 64) et simultanément le déplacement du profilé à usiner (28; 64) dans une direction de passage (x) du profilé (28; 64) ou dans la direction inverse par la couronne rotative (12; 70).

13. Procédé selon l'une quelconque des revendications 11 ou 12, **caractérisé par** la détermination d'un rapport entre une région de coupe de la lame de scie (22; 82) et une surface de coupe prévue au niveau du profilé à usiner (28; 64), un alignement du premier axe de pivotement (c, 88) se produisant lorsque la surface de coupe prévue passe dans la région de coupe de la lame de scie (22; 82), de telle sorte que celui-ci coupe le profilé à usiner (28; 64), et lorsqu'une surface de coupe prévue ne passe pas dans la région de scie de la lame de scie (22; 82), un alignement du premier axe de pivotement (c, 88) se produit de telle sorte que celui-ci ne coupe pas le profilé à usiner (28; 64) et qu'une rotation de la couronne rotative (12; 70) autour d'un angle défini se produise entre deux opérations d'usinage.

14. Procédé selon l'une quelconque des revendications 11 à 13, **caractérisé par** la détermination d'une séquence de plusieurs opérations de sciage, en particulier pour réaliser une découpe d'encoche, ainsi qu'une orientation d'une direction de rotation de la lame de scie (22; 82) par rapport au profilé à usiner (28, 64) en tenant compte de l'injection des copeaux et/ou d'un sens d'éjection d'une pièce profilée découpée au moyen des opérations de sciage.
